# EUROPÄISCHE PATENTSCHRIFT

(11) **EP 2 353 893 B1**
(45) Veröffentlichungstag und Bekanntmachung des Hinweises auf die Patenterteilung: **20.06.2012**
(21) Anmeldenummer: 10152606.9
(22) Anmeldetag: 04.02.2010
(51) Int. Cl.: B60D 1/32, B62D 53/08

(54) **Dämpfungssystem für ein Drehgelenk insbesondere eines Gelenkfahrzeuges**
Cushioning system for a swivel joint, in particular an articulated vehicle
Système d'amortissement pour une plate-forme pivotante, notamment un véhicule articulé

(43) Veröffentlichungstag der Anmeldung: 10.08.2011
(73) Patentinhaber: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- EP-A1- 0 233 850
- WO-A1-03/055735
- BE-A1- 875 962
- DE-A1- 3 320 278
- DE-A1- 3 327 240

## Beschreibung

Die vorliegende Erfindung betrifft gemäß dem Oberbegriff des Anspruchs 1 ein Dämpfungssystem für ein Drehgelenk mit zwei relativ zueinander um eine Drehachse verdrehbaren Gelenkteilen, insbesondere für ein Drehgelenk zwischen zwei Fahrzeugteilen eines Gelenkfahrzeuges, mit zwei hydraulischen Zylindereinheiten, die derart beidseitig einer bezüglich des Drehgelenkes und dessen neutraler Mittelstellung symmetrisch durch die Drehachse verlaufenden Mittel-Längsachse jeweils zwischen den Gelenkteilen angeordnet oder anzuordnen sind, dass bei Gelenk-Drehungen die Zylindereinheiten jeweils gegensinnig teleskopisch durch Einschub oder Auszug längenveränderbar sind, wobei jede Zylindereinheit aus einem Zylinder und einem darin verschiebbaren Kolben besteht und jeder Kolben innerhalb des Zylinders einen Zylinderraum von einem eine Kolbenstange umschließenden Ringraum abteilt, und wobei der Zylinderraum jeder Zylindereinheit hydraulisch einerseits kreuzweise mit dem Ringraum der jeweils anderen Zylindereinheit sowie andererseits mit einem Hydraulikspeicher verbunden ist.

Ein derartiges Dämpfungssystem ist beispielsweise in der DE 33 20 278 A1 in verschiedenen Ausführungen beschrieben. Dabei ist jede der zwei "Kreuz-Verbindungen" zwischen den Zylinder- und Ringräumen zusätzlich direkt mit einem Dämpfungsventil einer so genannten Durchfluss-Begrenzungseinrichtung sowie mit einem Hydraulikspeicher verbunden.

Auch die weiteren Dokumente EP0 233 850 A1, WO 03/055735A1, und DE 33 27240A1 beschreiben jeweils einen sehr ähnlichen Stand der Technik.

Solche Dämpfungssysteme werden vor allem in Gelenkfahrzeugen zur Dämpfung von rotatorisch oszillierenden Bewegungen im Gelenkbereich zwischen zwei Fahrzeugteilen eingesetzt. Das Drehgelenk erlaubt durch ein Einknicken der Fahrzeugteile auch Fahrten durch engere Kurvenradien.

Vor allem bei Fahrzeugen mit Antrieb im hinteren Fahrzeugteil (so genannte "Pusher"-Version) würden bei einer reinen Drehlagerung ohne Dämpfung Pendelbewegungen zwischen den Fahrzeugteilen auftreten, die sich zudem durch Schwingungen verstärken könnten. Die Drehlagerung muss deshalb so versteift (gedämpft) werden, dass Drehbewegungen noch möglich sind, jedoch schwingende Pendelbewegungen zwischen den Fahrzeugteilen verhindert werden.

Dazu sind Dämpfungssysteme der beschriebenen, gattungsgemäßen Art bekannt. Ein Nachteil dieser Systeme ist, dass bei einer Drehbewegung aus einer neutralen Mittellage des Gelenkes in einer Richtung derjenige Zylinder, welcher dabei durch Einschub teleskopisch verkürzt wird, schon nach einem relativ kleinen Drehwinkel in eine Stellung gelangt, in der seine verlängerte Längsachse und damit seine wirksame Kraftrichtungsachse sich der Gelenk-Drehachse nähert und dann sogar durch die Gelenk-Drehachse verläuft, so dass die Kraft aufgrund eines kürzer werdenden oder sogar gänzlich fehlenden Hebelarms praktisch kein Dämpfungsmoment mehr erzeugen kann. Dies führt dazu, dass gerade in Gelenk-Drehstellungen, in denen es besonders auf eine effektive Dämpfung ankommt, nur noch die andere, in dieser Drehrichtung sich durch Auszug verlängernde Zylindereinheit allein ein Dämpfungsmoment erzeugen kann, was aber für die Praxis unzureichend ist.

Der vorliegenden Erfindung liegt die Aufgabe zu Grunde, ein Dämpfungssystem der gattungsgemäßen Art so zu verbessern, dass es über den gesamten Gelenk-Drehwinkelbereich und insbesondere auch in den Endbereichen der möglichen Drehungen optimierte Dämpfungseigenschaften gewährleistet.

Erfindungsgemäß wird diese Aufgabe durch ein Dämpfungssystem mit einer im unabhängigen Anspruch 1 definierten Ausgestaltung gelöst. Vorteilhafte Weiterbildungen der Erfindung sind in den abhängigen Ansprüchen und in der anschließenden Beschreibung enthalten.

Demnach ist erfindungsgemäß vorgesehen, dass einerseits jeder Ringraum über eine direkte hydraulische Druckverbindung nur mit dem anderen Zylinderraum verbunden ist, während andererseits jeder Zylinderraum - zusätzlich zu der direkten Druckverbindung mit dem jeweils anderen Ringraum - derart über eine hydraulische, in Einschubrichtung der Zylindereinheit wirkende, in der Zylindereinheit integriert vorgesehene Endlagendämpfung mit dem Hydraulikspeicher verbunden ist, dass gegen Ende einer Einschubbewegung innerhalb des jeweiligen Zylinderraumes sowie über die direkte Druckverbindung auch in dem damit verbundenen Ringraum der anderen, gegensinnig in Auszugrichtung bewegten Zylindereinheit eine hydraulische Druckerhöhung bewirkt wird. Zwar kann diejenige Zylindereinheit, die durch ihre hydraulische Endlagendämpfung jeweils die erfindungsgemäße Druckerhöhung bewirkt, durch ihre ungünstige Stellung zum Gelenk nicht oder nur unwesentlich zur Erzeugung eines Dämpfungsmomentes beitragen, jedoch wird durch die erfindungsgemäße direkte Druckverbindung auch der jeweils andere Ringraum der gegenüberliegenden Zylindereinheit mit dem erhöhten hydraulischen Druck beaufschlagt, wobei diese gegenüberliegende Zylindereinheit in einer günstigeren Hebelstellung zum Gelenk steht und deshalb vor allem durch den erhöhten Druck in Verbindung mit dem günstigeren Hebelarm eine verbesserte, sehr effektive Dämpfung bewirken kann. Dies bedeutet mit anderen Worten, dass durch die Erfindung die eigentliche Dämpfung besonders in den Endbereichen des möglichen Drehwinkelbereiches jeweils ganz oder zumindest hauptsächlich durch diejenige Zylindereinheit erfolgt, die durch Auszug verlängert wird. Dabei wirkt der Druck über den Ringraum auf eine Ringfläche des Kolbens zur Erzeugung einer entsprechenden Kraft (F = p · A, Kraft gleich Druck mal Fläche). Die andere, durch Einschub verkürzte Zylindereinheit verliert trotz des erhöhten hydraulischen Drucks an effektiver Dämpfungswirkung, jedoch dient diese Zylindereinheit durch die erfindungsgemäße Zusammenschaltung zur Steuerung der erhöhten Dämpfung durch die jeweils andere Zylindereinheit.

Die Erfindung soll im Folgenden anhand der Zeichnung beispielhaft genauer erläutert werden. Dabei zeigen:
- Fig. 1: eine schematische Prinzipdarstellung eines Drehgelenkes mit zwei hydraulischen Zylindereinheiten eines Dämpfungssystems, und zwar in einer neutralen Mittelstellung des Drehgelenkes, jedoch ohne hydraulische Verbindungen,
- Fig. 2: eine Darstellung wie in Fig. 1 in einer verdrehten Stellung des Drehgelenkes, und zwar in einem Endbereich der möglichen Drehbewegung,
- Fig. 3: eine bevorzugte Ausführungsform des erfindungsgemäßen Dämpfungssystems in einer prinzipiellen hydraulischen Schaltung ohne Darstellung des Drehgelenkes, und zwar in der neutralen Mittelstellung,
- Fig. 4 und 5: jeweils eine weitere Darstellung wie in Fig. 3 zur Erläuterung der Vorgänge bei Gelenk-Drehungen in Richtung einer Endlage und
- Fig. 6: eine Darstellung wie in Fig. 3 in einer bevorzugten Weiterbildung.

In den verschiedenen Figuren der Zeichnung sind gleiche Teile stets mit den gleichen Bezugszeichen versehen.

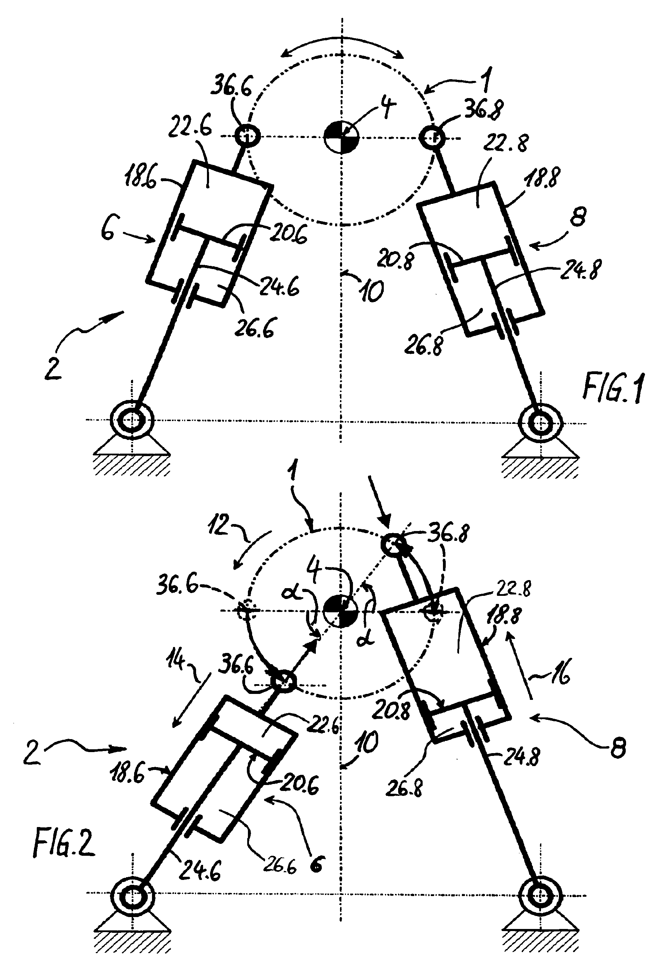

Wie sich zunächst aus Fig. 1 und 2 ergibt, ist ein nur stark schematisch angedeutetes Drehgelenk 1 mit einem hydraulischen Dämpfungssystem 2 ausgestattet. Das Drehgelenk 1 besteht aus zwei nicht genauer dargestellten und bezeichneten Gelenkteilen, die relativ zueinander um eine Drehachse 4 aus einer neutralen Mittelstellung heraus (Fig. 1) in beiden Richtungen über einen Drehwinkel α (Fig. 2) verdrehbar sind. Für eine bevorzugte Anwendung in Gelenkfahrzeugen kann das Drehgelenk 1 für einen Drehwinkelbereich mit α = 50° bis 60°, insbesondere ca. 56°, ausgelegt sein, so dass eine Drehung aus der neutralen Lage um +/- α möglich ist. Die Drehachse 4 verläuft dabei im Wesentlichen vertikal, in den Darstellungen gemäß Fig. 1 und 2 somit senkrecht zur Zeichnungsebene.

Von dem hydraulischen Dämpfungssystem 2 sind in Fig. 1 und 2 nur zwei hydraulischen Zylindereinheiten 6 und 8 dargestellt, die symmetrisch beidseitig einer Mittel-Längsachse 10 angeordnet sind, wobei die Längsachse 10 einer FahrzeugLängsachse entspricht und somit durch die Drehachse 4 verläuft. Die Zylindereinheiten 6, 8 sind jeweils gelenkig zwischen einem verdrehbaren Gelenkteil und einer ortsfesten Abstützung angeordnet und bei den Drehbewegungen teleskopisch gegensinnig durch Einschub oder Auszug längenveränderbar. Die Zylindereinheiten 6, 8 können - wie dargestellt - bezüglich ihrer Längsachsen jeweils in einem spitzen Winkel schräg zur Längsachse 10 ausgerichtet sein. In Fig. 2 ist beispielhaft eine Gelenkdrehung in Pfeilrichtung 12 veranschaulicht, wodurch die eine, linke Zylindereinheit 6 in Pfeilrichtung 14 eingeschoben (verkürzt) wird, während die gegenüberliegende andere, rechte Zylindereinheit 8 in Pfeilrichtung 16 ausgezogen (verlängert) wird. Bei einer umgekehrten Drehung erfolgen die Längenänderungen entsprechend umgekehrt.

Die beiden Zylindereinheiten 6, 8 sind gleichartig ausgebildet, so dass ihre im Folgenden beschriebenen Bestandteile jeweils mit den gleichen Bezugszeichen, allerdings zur Unterscheidung zusätzlich mit den Ziffern .6 bzw..8 bezeichnet sind.

So besteht jede Zylindereinheit 6, 8 aus einem Zylinder 18.6, 18.8 und einem darin axial verschiebbaren Kolben 20.6, 20.8. Jeder Kolben teilt innerhalb des Zylinders 18.6, 18.8 einen Zylinderraum 22.6, 22.8 druckdicht von einem eine Kolbenstange 24.6, 24.8 umschließenden Ringraum 26.6, 26.8 ab.

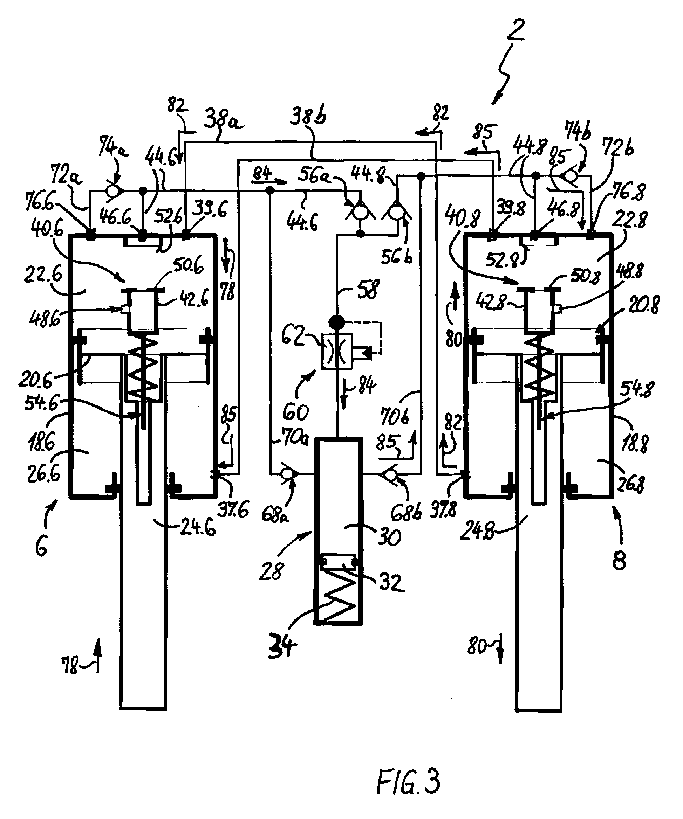

Das erfindungsgemäße Dämpfungssystem 2 ist vollständig mit seiner hydraulischen Verschaltung in jeder der Figuren 3 bis 6 dargestellt, hier allerdings ohne das Drehgelenk 1, so dass die Zylindereinheiten 6, 8 unabhängig von deren gelenkiger Verbindung mit dem Drehgelenk dargestellt sind. Dabei ist der Zylinderraum 22.6, 22.8 jeder Zylindereinheit 6, 8 hydraulisch einerseits kreuzweise mit dem Ringraum 26.8, 26.6 der jeweils anderen Zylindereinheit 8, 6 sowie andererseits mit einem Hydraulikspeicher 28 verbunden.

Die Zylindereinheiten 6, 8 sind in ihren Räumen 22, 26 vollständig mit einem nicht oder nur geringfügig kompressiblen Medium, insbesondere einem Hydrauliköl, gefüllt. Entsprechendes gilt auch für alle hydraulischen Verbindungen des Dämpfungssystems 2. Jeder Kolben 20.6, 20.8 weist eine Kolbendichtung auf, so dass jeder Zylinderraum 22.6, 22.8 druckdicht von dem zugehörigen Ringraum 26.6, 26.8 abgeteilt ist. Der Hydraulikspeicher 28 enthält einen Ausgleichsraum 30, der hinsichtlich seiner Aufnahmekapazität so ausgelegt ist, dass bei den durch die Drehbewegungen des Drehgelenkes 1 bewirkten Bewegungen der Zylindereinheiten 6, 8 ein jeweils verdrängter Anteil des Hydraulikmediums von dem Ausgleichsraum 30 aufgenommen bzw. abgegeben wird. Wie dargestellt, kann der Hydraulikspeicher 28 als Kolbenspeicher mit einem Trennkolben 32 ausgebildet sein, der verschiebbar im Hydraulikspeicher 28 geführt ist und gegen eine Feder 34 wirkt. Diese Feder 34 kann von einem mechanischen Federelement, beispielsweise einer Schraubendruckfeder, gebildet sein. Alternativ kann es sich auch um einen hydropneumatischen Hydraulikspeicher handeln, wobei der Trennkolben 32 gegen ein kompressibles Federmedium, insbesondere ein geeignetes Gas, wirkt, welches unter einem bestimmten Vorspanndruck steht.

An dieser Stelle soll anhand der Figuren 1 und 2 der grundsätzliche Nachteil eines solchen Drehgelenk-Dämpfungssystems erläutert werden. Ausgehend von der in Fig. 1 dargestellten neutralen Mittelstellung des Drehgelenkes 1 (entspricht bei einem Gelenkfahrzeug der Geradeaus-Fahrt) ist in Fig. 2 beispielhaft eine Drehung um einen bestimmten Winkel α nach links veranschaulicht. Eine Drehung nach rechts wäre entsprechend umgekehrt möglich. Dabei wird die z. B. linke Zylindereinheit 6 eingeschoben (verkürzt), während die andere Zylindereinheit 8 ausgezogen (verlängert) wird. Hierbei wandern Drehgelenk-Anlenkungen 36.6 und 36.8 der Zylindereinheiten 6, 8 mit der Drehung auf einer Kreisbahn. In einer bestimmten Drehstellung, wie sie in Fig. 2 dargestellt ist, verläuft dann die Längsachse der sich verkürzenden Zylindereinheit 6 durch die Drehachse 4 des Drehgelenkes 1, wobei auch die zugehörige Anlenkung 36.6 auf dieser Achse liegt, so dass die Zylindereinheit 6 aufgrund eines fehlenden effektiven Hebelarms kein wirksames Dämpfungsmoment mehr erzeugen kann; sie wirkt über die Anlenkung 36.6 lediglich in Richtung der Drehachse 4, was nur zu einer Lagerbelastung führt. Im Bereich dieser kritischen Drehstellung wird daher mit bekannten Dämpfungssystemen der beschriebenen Art nur eine schlechte, häufig unzureichende Dämpfung erreicht.

Dieser entscheidende Nachteil wird nun durch die vorliegende Erfindung beseitigt. Dazu ist gemäß Fig. 3 bis 6 erfindungsgemäß vorgesehen, dass einerseits jeder Ringraum 26.6, 26.8 über einen Ringraum-Anschluss 37.6, 37.8 und über eine direkte hydraulische Druckverbindung 38a, 38b sowie über einen Zylinderraum-Anschluss 39.6 bzw. 39.8 nur mit dem anderen Zylinderraum 22.8 bzw. 22.6 verbunden ist. Andererseits ist jeder Zylinderraum 22.6, 22.8 derart mittelbar über eine hydraulische, in Einschubrichtung der Zylindereinheit 6, 8 wirkende Endlagendämpfung 40.6 bzw. 40.8 mit dem Hydraulikspeicher 28 bzw. dem Ausgleichsraum 30 verbunden, dass gegen Ende einer Einschubbewegung innerhalb des jeweiligen Zylinderraums 22.6 bzw. 22.8 sowie über die direkte Druckverbindung 38a bzw. 38b auch in dem verbundenen Ringraum 26.8 bzw. 26.6 der anderen, gegensinnig in Auszugrichtung bewegten Zylindereinheit 8 bzw. 6 eine hydraulische Druckerhöhung bewirkt wird. Somit wird erfindungsgemäß über die Zylindereinheit, die sich gerade in einer Stellung befindet, in der sie selbst praktisch nicht zur Erzeugung eines Dämpfungsmomentes beitragen kann, eine Erhöhung des hydraulischen Drucks gesteuert, die dann in der anderen Zylindereinheit wirkt, die aufgrund eines effektiven Hebelarms noch ein Dämpfungsmoment erzeugen kann. Der künstlich erhöhte Hydraulikdruck steigert hier die Dämpfungswirkung, so dass insgesamt die Dämpfung wesentlich verbessert wird. Erfindungsgemäß erfolgt somit die eigentliche Dämpfung bei größeren Drehwinkeln durch diejenige Zylindereinheit, die gerade auseinandergezogen wird.

Aus der besonderen Hydraulikschaltung des erfindungsgemäßen Dämpfungssystems 2 ergibt sich, dass dasjenige Volumen des Hydraulikmediums, welches jeweils aus dem oder in den jeweiligen Ringraum 26.6, 26.8 strömt, gänzlich über die jeweilige Druckverbindung 38a, 38b über den verbundenen Zylinderraum 22.8, 22.6 strömt. Da sich bei der Drehbewegung die beiden schräg zur Drehachse ausgerichteten Zylindereinheiten 6, 8 unterschiedlich längen, fließt dann anteilig ein entsprechendes Ausgleichsvolumen in den oder aus dem Ausgleichsraum 30 des Hydraulikspeichers 28. Hierbei wird jede Strömung in den Hydraulikspeicher 28 über die jeweilige hydraulische Endlagendämpfung 40.6 bzw. 40.8 zur Erhöhung des Drucks in der beschriebenen kritischen Gelenkstellung gesteuert.

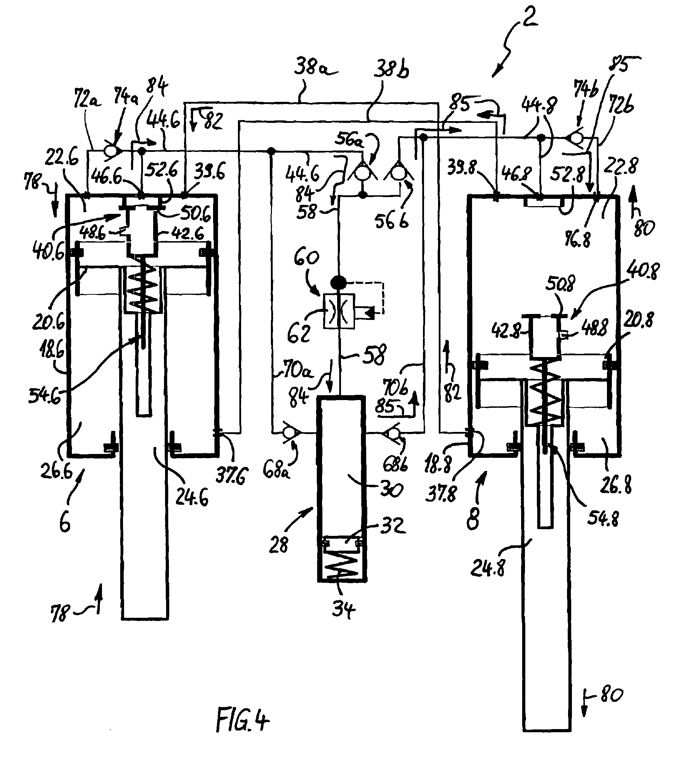

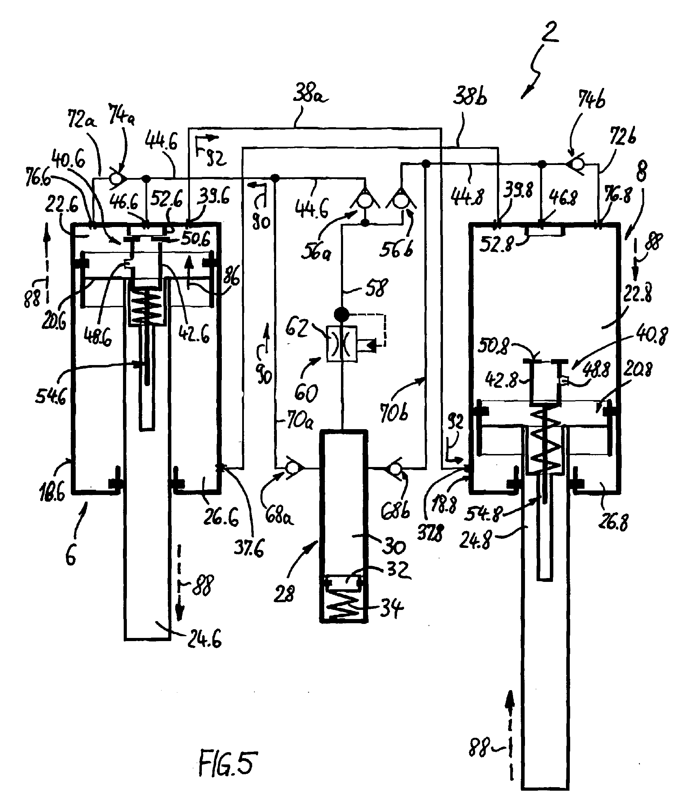

Was nun die Ausgestaltung der hydraulischen, integriert in den Zylindereinheiten 6, 8 vorgesehenen Endlagendämpfungen 40.6, 40.8 betrifft, so weist jede Zylindereinheit 6, 8 eine mechanisch mit dem Kolben 20.6, 20.8 verbundene Drosseleinrichtung 42.6, 42.8 derart auf, dass ab einer bestimmten Einschubstellung des jeweiligen Kolbens 20.6 bzw. 20.8 eine mit dem Hydraulikspeicher 28 über eine Leitung 44.6 bzw. 44.8 verbundene Zylinder-Anschlussöffnung 46.6 bzw. 46.8 von einem ersten, größeren Öffnungsquerschnitt auf eine Drosselöffnung 48.6, 48.8 mit einem zweiten, kleineren Drosselquerschnitt reduziert wird. Hierbei weist jede Drosseleinrichtung 42.6, 42.8 ein mit dem zugehörigen Kolben 20.6, 20.8 verbundenes Anschlagdichtelement 50.6, 50.8 auf, welches ab der bestimmten Einschubstellung (siehe Fig. 4) an einer den Bereich der Anschlussöffnung 46.6 bzw. 46.8 umschließenden Dichtung 52.6, 52.8 zur dichtenden Anlage gelangt, so dass die in der Drosseleinrichtung 42.6, 42.8 gebildete Drosselöffnung 48.6, 48.8 praktisch der Anschlussöffnung 46.6, 46.8 in Reihe vorgeschaltet wird. In weiterer bevorzugter Ausgestaltung ist dabei die Drosseleinrichtung 42.6, 42.8 derart gegen eine Federkraft verschiebbar mit dem zugehörigen Kolben 20.6, 20.8 verbunden, dass in der dichtenden Anlagestellung des Anschlagdichtelementes 50.6, 50.8 gegen die Federkraft noch eine weitergehende Einschubbewegung des Kolbens 20.6, 20.8 in Richtung eines nicht näher bezeichneten mechanischen Endanschlags möglich ist (vgl. dazu die Darstellungen in Fig. 4 und 5). In der bevorzugten Ausführungsform ist jede Drosseleinrichtung 42.6, 42.8 topf- oder becherförmig ausgebildet, wobei ein auf einer offenen Seite vorgesehener Umfangsrand das dichtend mit der die Zylinder-Anschlussöffnung 46.6, 46.8 umschließenden Dichtung 52.6, 52.8 zusammenwirkende Anschlagdichtelement 50.6, 50.8 aufweist, und wobei die Drosselöffnung 48.6, 48.8 in einer Becher-Umfangswandung angeordnet ist.

In weiterer zweckmäßiger Ausgestaltung ist jede Drosseleinrichtung 42.6, 42.8 über eine Schiebeführung 54.6, 54.8 axial verschiebbar in dem zugehörigen Kolben 20.6, 20.8 und/oder der Kolbenstange 24.6, 24.8 geführt. Dazu kann wie dargestellt ein mit der Drosseleinrichtung 42.6, 42.8 verbundener Führungsstift axial in eine Führungsöffnung des Kolbens bzw. der Kolbenstange eingreifen. Zwischen dem Kolben bzw. der Kolbenstange und der Drosseleinrichtung kann ein Druckfederelement, insbesondere in Form einer die Führungsstange umschließenden Spiraldruckfeder angeordnet sein.

Bezüglich der hydraulischen Verschaltung des erfindungsgemäßen Dämpfungssystems 2 ist noch zu erwähnen, dass die Anschlussöffnungen 46.6, 46.8 der beiden Zylindereinheiten 6, 8 über jeweils eines von zwei Rückschlagventilen 56a, 56b mit dem Hydraulikspeicher 28 bzw. dessen Ausgleichsraum 30 verbunden sind. Die Rückschlagventile 56a, b öffnen für eine Strömung aus dem jeweiligen Zylinderraum in den Ausgleichsraum 30, und sie schließen druckdicht gegen eine umgekehrte Strömung. Vorzugsweise sind die Rückschlagventile 56a, b ausgangsseitig mit einer gemeinsamen, mit dem Hydraulikspeicher 28 verbundenen Zuführleitung 58 verbunden.

In weiterer vorteilhafter Ausgestaltung ist dem Hydraulikspeicher 28 eine hydraulische Dämpfungseinrichtung 60 vorgeordnet. Hierbei kann es sich gemäß Fig. 3 bis 5 um ein in der Zuführleitung 58 angeordnetes Dämpfungsventil 62 handeln. Damit wird die in den Ausgleichsraum 30 strömende Hydraulikströmung durch Drosselung gedämpft. Dadurch wird unabhängig von der jeweiligen Drehrichtung des Drehgelenkes 1 bei jeder Drehbewegung eine entsprechende Dämpfung erreicht. Das Dämpfungsventil 62 kann hinsichtlich seiner Drosselwirkung verstellbar ausgeführt sein. Dabei kann bei einer Anwendung in einem Fahrzeug eine Steuerung beispielsweise anhand der jeweiligen Fahrgeschwindigkeit erfolgen. Zudem kann die Dämpfung natürlich auch manuell umschaltbar sein. Dies ist beispielsweise von Vorteil, wenn der Fahrer mit einem Schalter die Dämpfung auf eine hohe Stufe schalten und so die Einknickbewegung des Gelenkfahrzeuges erschweren möchte. Zudem kann eine solche Schaltung auch bei Schnee oder Eis das Anfahren aus einer Haltebucht erleichtern.

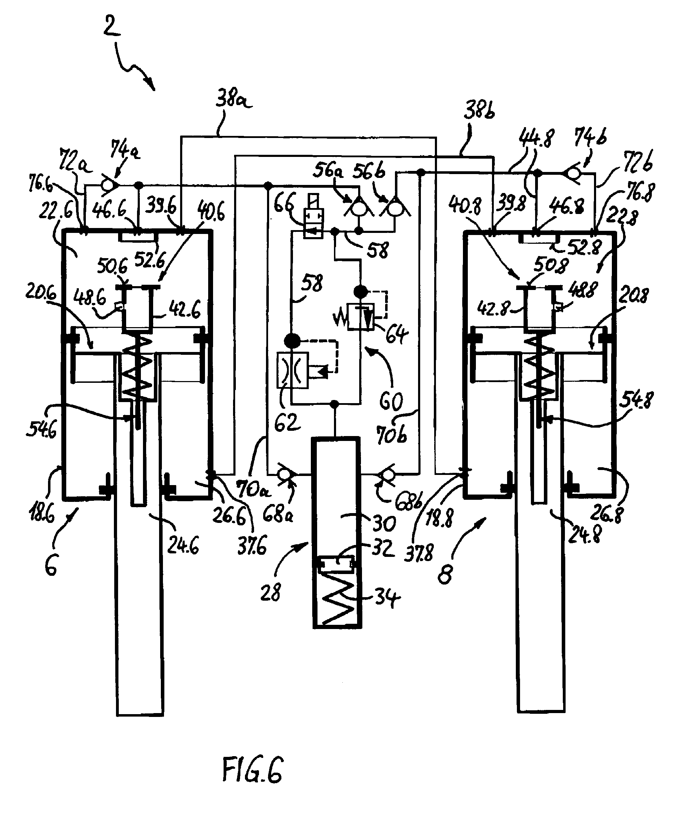

Bei der besonderen Ausführungsvariante gemäß Fig. 6 besteht die Dämpfungseinrichtung 60 aus zwei parallelen, umschaltbaren Dämpfungsventilen, und zwar bevorzugt aus dem Dämpfungsventil 62 und einem dazu parallel geschalteten oder schaltbaren Druckbegrenzungsventil 64. Zudem ist in der Zuführleitung 58 dem Dämpfungsventil 62 ein Schaltventil 66 vorgeschaltet, mit dem die Leitung geöffnet oder gesperrt werden kann. In dem Dämpfungsventil 62 wird mit steigender Durchflussgeschwindigkeit ein entsprechender Drosselwiderstand erzeugt. Das Druckbegrenzungsventil 64 ist auf einen bestimmten Öffnungsdruck von beispielsweise etwa 200 bar eingestellt. Solange das Dämpfungsventil 62 einen Drosselwiderstand kleiner als dieser Öffnungsdruck erzeugt, fließt das gesamte Hydraulikmedium über das Dämpfungsventil 62 in den Ausgleichsraum 30. Der Ausgleichsraum 30 ist mit den Zylinder-Anschlussöffnungen 46.6 und 46.8 über jeweils ein Rückschlagventil 68a, 68b und jeweils eine Rückführleitung 70a, 70b verbunden, so dass jeweils ein anteiliges Volumen des Hydraulikmediums auch aus dem Ausgleichsraum 30 in den sich jeweils vergrößernden Zylinderraum und von dort auch über die jeweilige direkte Druckverbindung 38a, b in den sich vergrößernden Ringraum fließen kann. Ist das Schaltventil 66 auf Durchfluss geschaltet, so wirkt das Dämpfungsventil 62 als variabler Drosselwiderstand, während das Druckbegrenzungsventil 64 als "Sicherheitsventil" für den Fall fungiert, dass das Dämpfungsventil 62 einen Drosselwiderstand aufbaut, der höher als der eingestellte Öffnungsdruck des Druckbegrenzungsventils 64 von beispielsweise 200 bar ist. Wird das Schaltventil 66 in Sperrstellung geschaltet, so muss das gesamte Hydraulikmedium über das Druckbegrenzungsventil 64 fließen. In diesem Fall ist folglich der Drosseiwiderstand mindestens so groß wie der Öffnungsdruck von beispielsweise 200 bar, so dass eine hohe Gelenkdämpfung gewährleistet ist.

Das Schaltventil 66 kann beispielsweise manuell oder aber automatisch von einem z. B. elektronisch erzeugten Signal geschaltet werden. Ein solches Signal kann beispielsweise der jeweilige Dreh- bzw. Knickwinkel des Drehgelenkes 1 sein. Erreicht das Drehgelenk 1 einen großen Drehwinkel α, so kann dies über Sensoren festgestellt werden, und ein dadurch erzeugtes Sensorsignal kann die Sperrschaltung des Ventils 66 auslösen. Der dadurch eingeschaltete hohe Drosselwiderstand bewirkt, dass das Drehgelenk 1 nicht so hart in einen mechanischen Drehanschlag dreht. Es handelt sich folglich um eine hydraulische Endlagendämpfung des Drehgelenkes 1. Dabei sind die Drosselwiderstände des Ventils 62 und/oder 64 in der Endlage der jeweiligen Zylindereinheit 6, 8 mit der jeweiligen Endlagendämpfung 40.6, 40.8 hydraulisch in Reihe geschaltet.

Es sei noch erwähnt, dass jede Zylinder-Anschlussöffnung 46.6, 46.8 zusätzlich noch über eine Bypassleitung 72a, 72b und ein darin angeordnetes Rückschlagventil 74a, 74b mit einem weiteren, separaten Zylinder-Einlass 76.6, 76.8 verbunden ist. Diese Maßnahme gewährleistet eine leichte Füllung bzw. Rückströmung in den jeweiligen Zylinderraum 22.6, 22.8, auch wenn in der jeweiligen Endlage die Endlagendämpfung 40.6, 40.8 aktiv ist, durch die wegen der engen Drosselöffnung 48 ein Rückfluss behindert werden würde. Die Rückschlagventile 74a, b sind mit einem sehr geringen Öffnungsdruck von insbesondere etwa 0,5 bar bis 1 bar ausgelegt. Durch diesen geringen Öffnungsdruck kann das Hydraulikmedium problemlos aus dem Ausgleichsbehälter 30 über das jeweilige Rückschlagventil 74 zurück in den Zylinderraum 22 fließen.

Zusammenfassend sollen nochmals die Besonderheiten der vorliegenden Erfindung wie folgt genannt werden:

Durch die direkten Kreuz-Druckverbindungen 38a, 38b in Kombination mit den Endlagendämpfungen 40.6, 40.8 erfolgt die Dämpfung in den ungünstigen Endlagen der Gelenk-Drehstellungen hauptsächlich über die jeweils in Zugrichtung wirkende Zylindereinheit mit erhöhtem Hydraulikdruck, wobei dieser Druck im Ringraum stets der gleiche wie im damit verbundenen Zylinderraum ist. Die Druckerhöhung wird jeweils in der eingeschobenen Zylindereinheit ausgelöst, die selbst durch ihre ungünstige Relativstellung zum Drehgelenk nicht oder nur unwesentlich zu der Dämpfung beitragen kann. Aufgrund der erfindungsgemäßen hydraulischen Schaltung muss stets das gesamte Hydraulikmedium über den Ausgleichsraum 30 des Hydraulikspeichers 28 fließen. Zudem fließt das in den oder aus dem jeweiligen Ringraum fließende Hydraulikmedium stets über den damit verbundenen Zylinderraum. Insgesamt führt die Erfindung zu einer sehr effektiven hydraulischen Dämpfung des Drehgelenkes 1.

Die Funktionsweise des erfindungsgemäßen Dämpfungssystems 2 dürfte anhand der Zeichnungsfiguren auch ohne ausführliche Erklärung verständlich sein. Wird beispielsweise gemäß Fig. 3 und 4 die linke Zylindereinheit 6 in Richtung der Pfeile 78 eingeschoben (verkürzt), so wird die andere, rechte Zylindereinheit 8 in Richtung der Pfeile 80 ausgezogen (verlängert). Der Zylinderraum 22.6 und der damit über die Druckverbindung 38a verbundene Ringraum 26.8 verfeinern sich, während sich der Zylinderraum 22.8 und der mit diesem über die andere Druckverbindung 38b verbundene Ringraum 26.6 vergrößern. Aus den sich verkleinernden Räumen wird ein bestimmtes Volumen des Hydraulikmediums verdrängt, wobei das Hydraulikmedium aus dem Ringraum 26.8 zunächst in den Zylinderraum 22.6 fließt (s. die Pfeile 82). Das gesamte verdrängte Volumen wird dann aus dem Zylinderraum 22.6 über die Leitung 44.6, das Rückschlagventil 56a und die Dämpfungseinrichtung 60 in den Ausgleichsraum 30 des Hydraulikspeichers 28 verdrängt (Pfeile 84). Die sich vergrößernden Räumen 22.8, 22.6 werden aus dem Ausgleichsraum 30 in Strömungsrichtung der Pfeile 85 aufgefüllt. Die Strömung in den Ausgleichsraum 30 ist anfänglich mit einem relativ geringen Strömungswiderstand bzw. mit einer von der Dämpfungseinrichtung 60 bewirkten Dämpfung möglich, bis in der in Fig. 4 dargestellten Situation die Endlagendämpfung 40.6 aktiv wird, indem das Anschlagdichtelement 50.6 der Drosseleinrichtung 42.6 zur dichtenden Anlage an der ringförmigen Dichtung 52.6 gelangt und dadurch die engere Drosselöffnung 48.6 der Zylinder-Anschlussöffnung 46.6 vorgeschaltet wird. Durch diese Drosselung entsteht ein erhöhter Strömungswiderstand, aus dem der erfindungsgemäß gewünschte Druckanstieg in dem Zylinderraum 22.6 sowie über die Druckverbindung 38a auch in dem gegenüberliegenden Ringraum 26.8 resultiert. Durch diesen erhöhten hydraulischen Druck im Ringraum 26.8 bewirkt die Zylindereinheit 8 in Zugrichtung eine hohe Dämpfung. Gemäß Fig. 5 ist nach anfänglich aktivierter Endlagendämpfung 40.6 noch eine weitergehende Einschubbewegung des Kolbens 20.6 in Pfeilrichtung 86 möglich. Während dieser weitergehenden Einschubbewegung strömt das Hydraulikmedium mit erhöhtem Druck durch die Drosselöffnung 48.6 ebenfalls in den Ausgleichsraum 30.

Wenn nachfolgend ausgehend von der in Fig. 5 dargestellten Situation eine Rückdrehung des Drehgelenkes 1 erfolgt, werden die Zylindereinheiten 6, 8 umgekehrt in Richtung der gestrichelten Pfeile 88 bewegt. Der sich dadurch wieder vergrößernde Zylinderraum 22.6 wird aus dem Ausgleichsraum 30 über das Rückschlagventil 68a, die Rückführleitung 70a, den Bypass 72a mit dem Rückschlagventil 74a und den Einlass 76.6 gefüllt (Pfeile 90). Der sich ebenfalls vergrößernde Ringraum 26.8 füllt sich dann wieder aus dem Zylinderraum 22.6 über die Druckverbindung 38a (Pfeile 92). Die Verdrängung des Hydraulikmediums aus den sich verkleinernden Räumen 22.8 und 26.6 erfolgt analog zu der obigen Beschreibung.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Dämpfungssystem (2) für ein Drehgelenk (1) mit zwei relativ zueinander um eine Drehachse (4) verdrehbaren Gelenkteilen, insbesondere für ein Drehgelenk zwischen zwei Fahrzeugteilen eines Gelenkfahrzeuges, mit zwei hydraulischen Zylindereinheiten (6, 8), die derart beidseitig einer durch die Drehachse (4) verlaufenden Längsachse (10) jeweils zwischen den Gelenkteilen angeordnet oder anzuordnen sind, dass bei Gelenk-Drehungen die Zylindereinheiten (6, 8) jeweils gegensinnig teleskopisch durch Einschub oder Auszug längenveränderbar sind, wobei jede Zylindereinheit (6 / 8) aus einem Zylinder (18.6/18.8) und einem darin verschiebbaren Kolben (20.6 / 20.8) besteht und jeder Kolben (20.6 / 20.8) innerhalb des Zylinders (18.6/18.8) einen Zylinderraum (22.6/22.8) von einem eine Kolbenstange (24.6 / 24.8) umschließenden Ringraum (26.6 / 26.8) abteilt, und wobei der Zylinderraum (22.6 / 22.8) jeder Zylindereinheit (6/8) hydraulisch einerseits kreuzweise mit dem Ringraum (26.8 /26.6) der jeweils anderen Zylindereinheit (8 /6) sowie andererseits mit einem Hydraulikspeicher (28) verbunden ist,
**dadurch gekennzeichnet, dass** einerseits jeder Ringraum (26.6 / 26.8) über eine direkte hydraulische Druckverbindung (38a / 38b) nur mit dem anderen Zylinderraum (22.8 / 22.6) verbunden ist, und dass andererseits jeder Zylinderraum (22.6 /22.8) zusätzlich über eine separate Anschlussöffnung (46.6/46.8) und eine vor dieser in der Zylindereinheit (6/8) derart ausgebildete hydraulische, in Einschubrichtung der Zylindereinheit (6/8) wirkende Endlagendämpfung (40.6/40.8) mit dem Hydraulikspeicher (28) verbunden ist, dass gegen Ende einer Einschubbewegung innerhalb des jeweiligen Zylinderraums (22.6 / 22.8) sowie über die direkte Druckverbindung (38a /38b) auch in dem verbundenen Ringraum (26.8 /26.6) der anderen, gegensinnig in Auszugrichtung bewegten Zylindereinheit (8 / 6) eine hydraulische Druckerhöhung bewirkt wird.

2. Dämpfungssystem nach Anspruch 1,
**dadurch gekennzeichnet, dass** die hydraulische Endlagendämpfung (40.6 / 40.8) jeder Zylindereinheit (6/8) eine mechanisch mit dem Kolben (20.6 / 20.8) verbundene Drosseleinrichtung (42.6 / 42.8) derart aufweist, dass ab einer bestimmten Einschubstellung des Kolbens (20.6 / 20.8) die mit dem Hydraulikspeicher (28) verbundene Zylinder-Anschlussöffnung (46.6 / 46.8) von einem ersten, größeren Öffnungsquerschnitt auf eine Drosselöffnung (48.6 / 48.8) mit einem zweiten, kleineren Drosselquerschnitt reduziert wird.

3. Dämpfungssystem nach Anspruch 2,
**dadurch gekennzeichnet, dass** die Drosseleinrichtung (42.6/42.8) ein Anschlagdichtelement (50.6 / 50.8) aufweist, welches ab der bestimmten Einschubstellung an einer den Bereich der Anschlussöffnung (46.6 / 46.8) umschließenden Dichtung (52.6 / 52.8) zur dichtenden Anlage gelangt.

4. Dämpfungssystem nach Anspruch 2 oder 3,
**dadurch gekennzeichnet, dass** die Drosseleinrichtung (42.6/42.8) derart gegen eine Federkraft verschiebbar mit dem Kolben (20.6 / 20.8) verbunden ist, dass in der dichtenden Anlagestellung gegen die Federkraft noch eine weitergehende Einschubbewegung des Kolbens (20.6 / 20.8) möglich ist.

5. Dämpfungssystem nach einem der Ansprüche 2 bis 4,
**dadurch gekennzeichnet, dass** die Drosseleinrichtung (42.6 / 42.8) topf- oder becherartig ausgebildet ist, wobei ein auf einer offenen Seite vorgesehener Umfangsrand das dichtend mit der die Zylinder-Anschlussöffnung (46.6 / 46.8) umschließenden Dichtung (52.6 /52.8) zusammenwirkende Anschlagdichtelement (50.6 / 50.8) aufweist, und wobei die Drosselöffnung (48.6/48.8) in einer Becher-Umfangswandung angeordnet ist.

6. Dämpfungssystem nach einem der Ansprüche 2 bis 5,
**dadurch gekennzeichnet, dass** die Drosseleinrichtung (42.6 / 42.8) über eine Schiebeführung (54.6 / 54.8) axial verschiebbar in dem Kolben (20.6 / 20.8) und/oder der Kolbenstange (24.6 /24.8) geführt ist.

7. Dämpfungssystem nach einem der Ansprüche 2 bis 6,
**dadurch gekennzeichnet, dass** die Anschlussöffnungen (46.6 /46.8) der beiden Zylindereinheiten (6 / 8) über jeweils eines von zwei Rückschlagventilen (56a / 56b) und vorzugsweise über eine gemeinsame Zuführleitung (58) mit dem Hydraulikspeicher (28) verbunden sind.

8. Dämpfungssystem nach einem der Ansprüche 1 bis 7,
**dadurch gekennzeichnet, dass** dem Hydraulikspeicher (28) eine hydraulische Dämpfungseinrichtung (60) mit mindestens einem Dämpfungsventil (62) oder mit mindestens zwei umschaltbaren Dämpfungsventilen (62, 64) vorgeordnet ist.

9. Dämpfungssystem nach einem der Ansprüche 2 bis 8,
**dadurch gekennzeichnet, dass** der Hydraulikspeicher (28) mit den Zylinder-Anschlussöffnungen (46.6/46.8) über jeweils ein Rückschlagventil (68a / 68b) und jeweils eine Rückführleitung (70a /70b) verbunden ist.

10. Dämpfungssystem nach einem der Ansprüche 2 bis 9,
**dadurch gekennzeichnet, dass** die Zylinder-Anschlussöffnung (46.6 /46.8) jeder Zylindereinheit (6 / 8) über eine Bypassleitung (72a / 72b) und ein Rückschlagventil (74a / 74b) mit einem zusätzlichen Zylinder-Einlass (76.6 / 76.8) verbunden ist.

## Claims

1. A damping system (2) for a swivel joint (1) with two joint parts rotatable relative to one another about a rotational axis (4), in particular for a swivel joint between two vehicle parts of an articulated vehicle, having two hydraulic cylinder units (6, 8) which are arranged or are to be arranged in each case between the joint parts, either side of a longitudinal axis (10), running through the rotational axis (4), in such a manner that the cylinder units (6, 8) are in each case telescopically alterable in length in opposite directions through insertion or extension upon joint rotations, wherein each cylinder unit (6/8) consists of a cylinder (18.6/18.8) and a piston (20.6/20.8) displaceable therein and, within the cylinder (18.6/18.8), each piston (20.6/20.8) separates a cylinder chamber (22.6/22.8) from an annular chamber (26.6/26.8) enclosing a piston rod (24.6/24.8), and wherein the cylinder chamber (22.6/22.8) of each cylinder unit (6/8) is connected hydraulically on the one hand cross-wise to the annular chamber (26.8/26.6) of the other cylinder unit (8/6) in each case and on the other hand to an hydraulic accumulator (28), **characterised in that** on the one hand each annular chamber (26.6/26.8) is, via a direct hydraulic pressure connection (38a/38b), only connected to the other cylinder chamber (22.8/22.6), and **in that** on the other hand each cylinder chamber (22.6/22.8) is in addition connected to the hydraulic accumulator (28) via a separate connection opening (46.6/46.8) and an hydraulic end position damping means (40.6/40.8) which acts in the insertion direction of the cylinder unit (6/8) and which is located upstream of the connection opening (46.6/46.8) in the cylinder unit (6/8) in such a manner that towards the end of an insertion motion within the respective cylinder chamber (22.6/22.8) as well as via the direct pressure connection (38a/38b), an hydraulic pressure increase is effected also in the connected annular chamber (26.8/26.6) of the other cylinder unit (8/6) moved in an opposite direction in the extension direction.

2. A damping system according to claim 1, **characterised in that** the hydraulic end position damping means (40.6/40.8) of each cylinder unit (6/8) has a throttle device (42.6/42.8), mechanically connected to the piston (20.6/20.8), in such a manner that from a certain insertion position of the piston (20.6/20.8) onwards, the cylinder connection opening (46.6/46.8) connected to the hydraulic accumulator (28) is reduced from a first, larger opening cross-section to a throttle opening (48.6/48.8) with a second, smaller throttle cross-section.

3. A damping system according to claim 2, **characterised in that** the throttle device (42.6/42.8) has a stop sealing element (50.6/50.8) which from the certain insertion position onwards reaches a seal (52.6/52.8), enclosing the region of the connection opening (46.6/46.8), for sealing contact.

4. A damping system according to claim 2 or 3, **characterised in that** the throttle device (42.6/42.8) is connected to the piston (20.6/20.8) so as to be displaceable against an elastic force, in such a manner that in the sealing contact position another continuing insertion motion of the piston (20.6/20.8) is possible against the elastic force.

5. A damping system according to any one of claims 2 to 4, **characterised in that** the throttle device (42.6/42.8) is pot-like or beaker-like, wherein a circumferential edge, provided on an open side, has the stop sealing element (50.6/50.8) cooperating in a sealing manner with the seal (52.6/52.8) enclosing the cylinder connection opening (46.6/46.8), and wherein the throttle opening (48.6/48.8) is arranged in a beaker circumferential wall.

6. A damping system according to any one of claims 2 to 5, **characterised in that** the throttle device (42.6/42.8) is guided in the piston (20.6/20.8) and/or the piston rod (24.6/24.8) in an axially displaceable manner via a slide guide device (54.6/54.8).

7. A damping system according to any one of claims 2 to 6, **characterised in that** the connection openings (46.6/46.8) of the two cylinder units (6/8) are connected to the hydraulic accumulator (28) via in each case one of two back-pressure valves (56a/56b) and preferably via a common feed line (58).

8. A damping system according to any one of claims 1 to 7, **characterised in that** an hydraulic damping device (60) with at least one damping valve (62) or with at least two reversible damping valves (62, 64) is arranged upstream of the hydraulic accumulator (28).

9. A damping system according to any one of claims 2 to 8, **characterised in that** the hydraulic accumulator (28) is connected to the cylinder connection openings (46.6/46.8) via a respective back-pressure valve (68a/68b) and a respective return line (70a/70b).

10. A damping system according to any one of claims 2 to 9, **characterised in that** the cylinder connection opening (46.6/46.8) of each cylinder unit (6/8) is connected to an additional cylinder inlet (76.6/76.8) via a bypass line (72a/72b) and a back-pressure valve (74a/74b).

## Revendications

1. Système d'amortissement (2) pour une plateforme pivotante (1) avec deux parties d'articulation pivotantes l'une par rapport à l'autre autour d'un axe de rotation (4), en particulier pour une plateforme pivotante entre deux parties de véhicule d'un véhicule articulé, avec deux unités de cylindres hydrauliques (6, 8) qui sont disposées ou à disposer des deux côtés d'un axe longitudinal (10) passant par l'axe de rotation (4) de telle sorte qu'en cas de pivotements articulés, les unités de cylindres (6, 8) sont variables en longueur de manière télescopique en sens opposés par insertion ou extraction, dans lequel chaque unité de cylindre (6/8) se compose d'un cylindre (18.6/18.8) et d'un piston (20.6/20.8) mobile à l'intérieur de celui-ci, et à l'intérieur du cylindre (18.6/18.8), chaque piston (20.6/20.8) divise un compartiment de cylindre (22.6/22.8) par rapport à un compartiment annulaire (26.6/26.8) entourant une tige de piston (24.6/24.8), et dans lequel le compartiment de cylindre (22.6/22.8) de chaque unité de cylindre (6/8) est relié en croix de manière hydraulique, d'une part au compartiment annulaire (26.8/26.6) de l'autre unité de cylindre (8/6) respectivement, ainsi que d'autre part à un accumulateur hydraulique (28),
**caractérisé en ce que** d'une part, chaque compartiment annulaire (26.6/26.8) est relié par une connexion de pression (38a/38b) hydraulique directe uniquement à l'autre compartiment de cylindre (22.8/22.6), et **en ce que** d'autre part, chaque compartiment de cylindre (22.6/22.8) est en outre relié à l'accumulateur hydraulique (28) au travers d'une ouverture de connexion séparée (46.6/46.8) et situé devant un dispositif d'amortissement de fin de course (40.6/40.8) hydraulique, agissant dans le sens d'insertion de l'unité de cylindre (6/8) et réalisé de telle sorte que vers la fin d'un mouvement d'insertion à l'intérieur du compartiment de cylindre (22.6/22.8) respectif de l'unité de cylindre (6/8), ainsi que par le biais de la connexion de pression (38a/38b) directe, une montée en pression hydraulique est provoquée également dans le compartiment annulaire associé (26.8/26.6) de l'autre unité de cylindre (8/6) déplacée en sens opposés dans le sens d'extraction.

2. Système d'amortissement selon la revendication 1, **caractérisé en ce que** l'amortissement de fin de course hydraulique (40.6/40.8) de chaque unité de cylindre (6/8) présente un dispositif d'étranglement (42.6/42.8) relié mécaniquement au piston (20.6/20.8) de telle sorte qu'à partir d'une certaine position d'insertion du piston (20.6/20.8), l'ouverture de raccordement de cylindre (46.6/46.8) reliée à l'accumulateur hydraulique (28) est réduite d'une première section d'ouverture plus grande à une ouverture d'étranglement (48.6/48.8) d'une deuxième section d'étranglement plus petite.

3. Système d'amortissement selon la revendication 2, **caractérisé en ce que** le dispositif d'étranglement (42.6/42.8) présente un élément d'étanchéité de butée (50.6/50.8) qui, à partir d'une certaine position d'insertion, vient en butée étanche contre un joint (52.6/52.8) entourant la zone de l'ouverture de raccordement (46.6/46.8).

4. Système d'amortissement selon la revendication 2 ou 3, **caractérisé en ce que** le dispositif d'étranglement (42.6/42.8) est relié au piston (20.6/20.8) de manière mobile contre une force de ressort de telle sorte que dans la position en butée étanche contre la force de ressort, un mouvement d'insertion supplémentaire du piston (20.6/20.8) est possible.

5. Système d'amortissement selon l'une quelconque des revendications 2 à 4, **caractérisé en ce que** le dispositif d'étranglement (42.6/42.8) est réalisé à la manière d'un pot ou godet, dans lequel un bord périphérique prévu sur un côté ouvert présente l'élément d'étanchéité de butée (50.6/50.8) coopérant de manière étanche avec le joint (52.6/52.8) entourant l'ouverture de raccordement de cylindre (46.6/46.8), et dans lequel l'ouverture d'étranglement (48.6/48.8) est agencée dans une paroi périphérique de godet.

6. Système d'amortissement selon l'une quelconque des revendications 2 à 5, **caractérisé en ce que** le dispositif d'étranglement (42.6/42.8) est guidé par un guidage coulissant (54.6/54.8) de manière axialement mobile dans le piston (20.6/20.8) et/ou la tige de piston (24.6/24.8).

7. Système d'amortissement selon l'une quelconque des revendications 2 à 6, **caractérisé en ce que** les ouvertures de raccordement (46.6/46.8) des deux unités de cylindres (6/8) sont reliées à l'accumulateur hydraulique (28) par respectivement l'un de deux clapets anti retour (56a/56b) et de préférence par une conduite d'alimentation commune (58).

8. Système d'amortissement selon l'une quelconque des revendications 1 à 7, **caractérisé en ce qu'**en amont de l'accumulateur hydraulique (28) est placé un dispositif d'amortissement hydraulique (60) avec au moins une soupape d'amortissement (62) ou avec au moins deux soupapes d'amortissement réversibles (62, 64).

9. Système d'amortissement selon l'une quelconque des revendications 2 à 8, **caractérisé en ce que** l'accumulateur hydraulique (28) est relié aux ouvertures de raccordement de cylindre (46.6/46.8) respectivement par un clapet anti retour (68a/68b) et respectivement une conduite de retour (70a/70b).

10. Système d'amortissement selon l'une quelconque des revendications 2 à 9, **caractérisé en ce que** l'ouverture de raccordement de cylindre (46.6/46.8) de chaque unité de cylindre (6/8) est reliée à une entrée de cylindre supplémentaire (76.6/76.8) par une dérivation (72a/72b) et un clapet anti retour (74a/74b).
